# EUROPÄISCHE PATENTSCHRIFT

(11) **EP 1 527 931 B1**
(45) Veröffentlichungstag und Bekanntmachung des Hinweises auf die Patenterteilung: **15.08.2007**
(21) Anmeldenummer: 04025107.6
(22) Anmeldetag: 22.10.2004
(51) Int. Cl.: B60K 15/05

(54) **Vorrichtung zum Verschliessen einer Zugangsöffnung in einer Kraftfahrzeugaussenhaut**
Device for closing an access opening in the outer skin of a motor vehicle
Dispositif d'obturation d'une ouverture d'accès dans un revêtement extérieur d'un véhicule automobile

(30) Priorität: 29.10.2003 DE 10350466
(43) Veröffentlichungstag der Anmeldung: 04.05.2005
(73) Patentinhaber: Schefenacker-Engelmann Spiegel GmbH, 71409 Schwaikheim (DE)
(72) Erfinder: Busch, Marcus, 31275 Lehrte (DE); Bultmann, Etzhard, 30900 Wedemark (DE)
(74) Vertreter: Stornebel, Kai

(56) Entgegenhaltungen:
- DE-A1- 4 425 838
- DE-A1- 19 860 401
- DE-A1- 19 935 454
- PATENT ABSTRACTS OF JAPAN Bd. 008, Nr. 028 (M-274), 7. Februar 1984 (1984-02-07) & JP 58 185325 A (NISSAN JIDOSHA KK), 29. Oktober 1983 (1983-10-29)

## Beschreibung

Die Erfindung befindet eine Vorrichtung zum Verschließen einer Tankzugangsöffnung in einer Kraftfahrzeugaußenhaut mit einer Verschlußklappe, die aus einer Verschlußstellung in eine Zugangsstellung verschwenkbar ist, wobei in der Verschlußstellung die Verschlußklappe im Wesentlichen bündig mit der Fahrzeugau-βenhaut abschließt.

Aus dem Stand der Technik ist bekannt, dass ein Tankstutzen, der mit einem Tankdeckel verschlossen ist, in einer Tankmulde angeordnet ist, wobei die Zugangsöffnung über eine Tankklappe verschließbar ist. Diese Tankklappe schließt bündig mit der Außenhaut des Kraftfahrzeuges ab und ist in der Regel in der Farbe des Kraftfahrzeuges lackiert. Die Tankklappe kann zum Öffnen der Zugangsöffnung aufgeklappt werden, indem die Tankklappe um eine Achse verschwenkt wird, die im wesentlichen in einer Ebene mit der die Verschlußklappe umgebenen Kraftfahrzeugaußenhaut oder parallel dazu liegt, so dass in der geöffneten Stellung die Verschlußklappe herausgeklappt ist. In der geöffneten Stellung steht die Verschlußklappe mehr oder weniger senkrecht zu der Kraftfahrzeugaußenhaut.

Das Herausstehen der Verschlußklappe kann ein Verhaken von Kleidungsstücken oder der Zapfpistole zur Folge haben, ebenfalls stört eine herausgeklappte Verschlußklappe während der Fahrt, falls das Einklappen vergessen wird.

Die JP 58 185325 A1 (beinhaltet die Merkmale des Oberbegriffs des Anspruchs 1) beschreibt einen Öffnungs- und Schließmechanismus einer Tankklappe, bei der in der geschlossenen Stellung die Tankklappe im Wesentlichen bündig mit der Kraftfahrzeugaußenhaut abschließt. Exzentrisch zu der Zugangsöffnung ist die Drehachse der Tankklappe unter Federvorspannung gelagert, so dass nach Lösen eines Verriegelungsstiftes über eine vorgespannte Feder die Tankklappe nach außen gedrückt wird, damit sie in einem Abstand zu der Kraftfahrzeugaußenhaut absteht und verschwenkt werden kann. Auch hier besteht die Gefahr, dass Kleidungsstücke verhaken oder störende Einflüsse während der Fahrt bei einer vergessenen Tankklappe entstehen.

Die DE 44 25 838 A1 beschreibt eine Einrichtung zum Verstellen eines Tankdeckels mit zwei wendelförmig ausgebildeten Gleitelementen, deren gemeinsame Drehachse exzentrisch zu einer Einfüllöffnung angeordnet sind. Ein erstes Gleitelement ist motorisch angetrieben und wird relativ zu dem zweiten Gleitelement verdreht, so dass eine Axialverlagerung des zweiten Gleitelementes, an dem der Tankdeckel angeordnet ist, bewirkt wird. Nach Abschluss der Axialbewegung wird das zweite Gleitelement über einen Mitnehmer zusammen mit dem Tankdeckel verschwenkt, so dass die Tanköffnung freigegeben wird. Der Tankdeckel, die Bewegungsmechanik und der Motor befinden sich dabei innerhalb der Tankmulde.

Die DE 199 35 454 A1 beschreibt eine Vorrichtung zum automatischen Öffnen und Schließen eines Tankdeckels und einer Tankklappe eines Kraftfahrzeuges, bei dem die Tankklappe über eine Kulissenführung in das Innere einer Kraftfahrzeugkarosse verlagert und anschließend linear verschoben wird. Der Verschiebemechanismus und die Tankklappe befinden sich dabei innerhalb einer Tankmulde.

Aufgabe der vorliegenden Erfindung ist es, eine verbesserte Vorrichtung zum Verschließen einer Zugangsöffnung in einer Kraftfahrzeugaußenhaut bereitzustellen.

Erfindungsgemäß wird diese Aufgabe dadurch gelöst, dass die gattungsgemäße Verschlussklappe, die im wesentlichen orthogonal zu der Kraftfahrzeugaußenhaut verfahrbar und um eine Schwenkachse, die im wesentlichen orthogonal zu der Kraftfahrzeugaußenhaut orientiert ist, verschwenkbar gelagert ist, wobei die Verschlußklappe nach innen verfahrbar gelagert ist und ihr ein Antrieb, insbesondere Motor zugeordnet ist, die Verschlussklappe nach innen verfährt und umeine Drehachse verschwenkt und die Verschlussklappe in der geöffneten Stellung aus der Tankmulde herausfährt. Dabei ist die Verschlussklappe zusammen mit dem Antrieb und der Tankmulde als ein Modul ausgebildet. Mit der erfindungsgemäßen Vorrichtung ist es möglich, dass zunächst die Verschlußklappe in Richtung auf das Fahrzeuginnere oder auf das Fahrzeugäußere verfahren wird, so dass die Verschlußklappe oberhalb der Kraftfahrzeugaußenhaut oder unterhalb der Kraftfahrzeugaußenhaut verschwenkbar ist. Über die verschwenkbare Lagerung um eine Achse im wesentlichen parallel zu der Verfahrachse, also senkrecht zu der Kraftfahrzeugaußenhaut, ist es möglich, die Zugangsöffnung freizugeben, indem die Verschlußklappe mehr oder weniger vollständig aus der Kontur der Zugangsöffnung verschwenkt und unterhalb der Kraftfahrzeugaußenhaut verfahren wird. Das Verfahren nach innen und ein Verschwenken unterhalb der Kraftfahrzeugaußenhaut hat den Vorteil, dass die Verschlußklappe nicht störend aus der Kontur des Kraftfahrzeuges heraussteht, so dass das Risiko eines Verhakens ausgeschlossen wird. Darüber hinaus werden die störenden Effekte bei einem Nichtschließen der Verschlußklappe minimiert. Die Vorrichtung ist dabei als ein komplett zu fertigendes Modul ausgebildet, das aus der Verschlußklappe besteht, die als Tankklappe ausgebildet ist und zusammen mit dem Antrieb und einer Tankmulde vorgefertigt wird. Eine integrierte Weichkomponente oder Dichtung zur Abdichtung des Systems gegenüber Staub, Wasser und Kraftstoffgasen und einem Trägerelement für die Tankklappe können ebenfalls vorgesehen sein. Ein Ablauf für Kraftstoff oder Wasser im Bereich des Tankstutzens kann ebenfalls in dem System integriert sein, das aus mehreren Komponenten besteht. Die Ausbildung als komplett montierbares Modul erleichtert die spätere Montage im Kraftfahrzeug erheblich. Das Verfahren der Verschlussklappe in der geöffneten Stellung aus dem Tankmodul hat den Vorteil, dass eine Verschmutzung während des Tankvorganges vermieden wird.

Eine Weiterbildung der Erfindung sieht vor, dass der Verschlußklappe ein Antrieb, insbesondere ein Motor, zugeordnet ist, der die Verschlußklappe nach innen verfährt und nach dem Verfahren unterhalb der Kraftfahrzeugaußenhaut um die entsprechende Drehachse verschwenkt. Auf diese Art und Weise ist es möglich, über einen Schalter innerhalb des Kraftfahrzeuges oder eine Fernbedienung, die beispielsweise in dem Kraftfahrzeugschlüssel inegriert ist, den Antrieb zu aktivieren und die Verschlußklappe verfahren und verschwenken zu lassen. Alternativ zu einem motorischen Antrieb kann ein manueller Antrieb vorgesehen sein, beispielsweise auch als ein Notantrieb für den Fall, dass der Motor nicht betriebsbereit ist.

Vorteilhafter Weise liegt bei einer Verfahrbarkeit der Verschlußklappe nach innen die Drehachse außerhalb der Kontur der Verschlußklappe, so dass bei einem Verschwenken um die Drehachse die Zugangsöffnung vollständig freigegeben wird.

Es ist zudem vorgesehen, dass die Verschlußklappe auf einem Trägerelement angeordnet ist, das verschieblich und verschwenkbar gelagert ist, so dass die Verschlußklappe zweiteilig aufgebaut ist und ein Lackieren der Tankklappenaußenhaut sowohl online als auch extern möglich ist. Aufgrund der Tatsache, dass die Innenseite der Verschlußklappe nicht mehr sichtbar ist, wird für die Innenseite keine zusätzliche Lackierung mehr benötigt, wie dies in herkömmlichen Systemen der Fall ist. Auf diese Weise werden die Kosten für die Herstellung der Tankklappe minimiert. Aufgrund des zweiteiligen Aufbaues der Tankklappe ist es möglich, dass die Tankklappenaußenhaut zusammen mit der übrigen Fahrzeugkarosse unabhängig von dem Trägerelement lackiert wird, so dass Farbunterschiede in der Fahrzeugkarosserie nicht auftreten.

Die Verschlußklappenaußenhaut ist auf dem Trägerelement vorteilhafter Weise formschlüssig festgelegt oder festgeklebt, wobei die Verschlußklappe insgesamt oder die Verschlußklappenaußenhaut an sich aus Kunststoff oder Metall ausgebildet sein kann.

Um Störungen im Ablauf der Öffnungsbewegung zu verhindern, ist es vorgesehen, dass zwischen dem Antrieb und der Verschlußklappe eine Rutschkupplung angeordnet ist, so dass die Tankklappe nicht über ein vorbestimmtes Maß hinaus verschwenkt werden kann, das beispielsweise durch einen Anschlag vorgegeben ist. Fährt die Verschlußklappe gegen diesen Anschlag, wird die Rutschkupplung aktiviert, um die Verschlußklappe und den Antrieb zu schonen.

Alternativ zu einem motorischen Antrieb ist auch ein manuelles System denkbar, bei dem der Antrieb als Fehlelement ausgebildet ist und die Bewegung beim Schließen oder Öffnen mit einem Federelement herbeigeführt wird.

Nachfolgend wird ein Ausführungsbeispiel der Erfindung anhand der beigefügten Figuren näher erläutert werden.

Es zeigen:
- Figur 1: eine Vorrichtung in Draufsicht und Schnittansicht;
sowie
- Figur 2: eine nicht zur Erfindung gehörige Variante der Vorrichtung in Draufsicht und Schnittansicht.

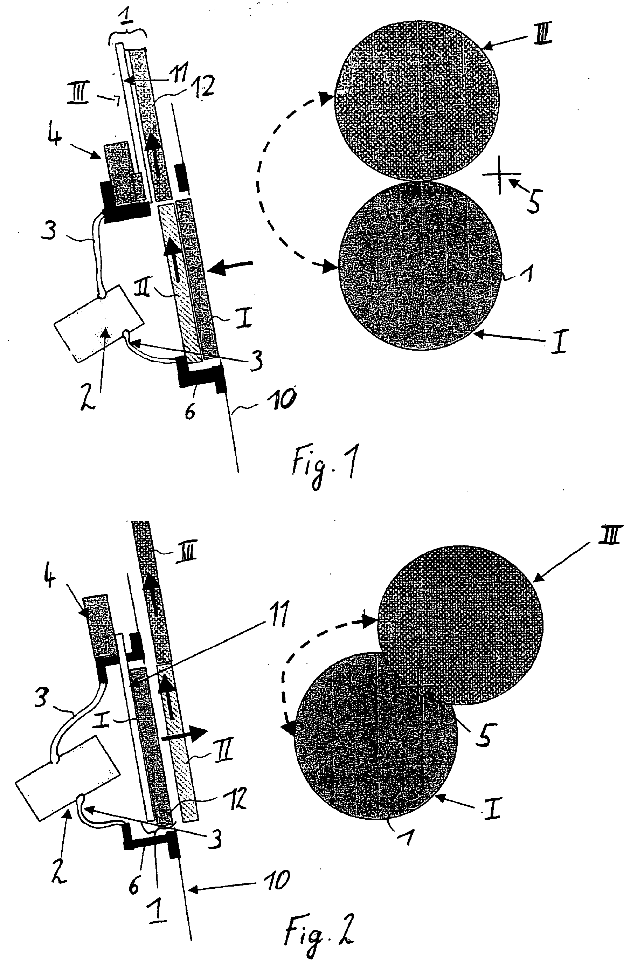

In der Figur 1 ist in der rechten Darstellung eine Draufsicht auf eine Tankklappe 1 in einer Verschlußstellung I gezeigt. Die Tankklappe 1 ist um eine Drehachse 5 verschwenkbar und parallel zu der Drehachse 5 verfahrbar gelagert. Aus der Verschlußstellung I kann die Tankklappe 1 in eine geöffnete Stellung III verschwenkt werden, wie durch den gestrichelten Doppelpfeil angedeutet ist. Aus der geöffneten Stellung III kann die Tankklappe 1 in die Verschlußstellung I zurückgeschwenkt und in die Verschlußposition verfahren werden.

In der linken Darstellung der Figur 1 ist die Vorrichtung in einer Schnittdarstellung gezeigt, wobei in dieser Darstellung drei Phasen des Öffnens einer Zugangsöffnung gezeigt sind. In der Verschlußstellung I liegt die Tankklappe 1 bündig abschließend mit einer Kraftfahrzeugaußenhaut 10, so dass sich im wesentlichen ein absatzloser Übergang zwischen der Kraftfahrzeugaußenhaut 10 und der Tankklappe 1 verwirklicht. Zum Öffnen der Tankklappe 1 wird, wie durch den senkrecht zu der Tankklappe 1 gerichteten Pfeil angedeutet, die Tankklappe 1 aus der Verschlußstellung I in eine Zwischenstellung II verfahren, wobei die Verfahrbewegung im wesentlichen orthogonal zu der Tankklappe 1 und der Kraftfahrzeugaußenhaut 10 verläuft. Gemäß Figur 1 verfährt die Tankklappe 1 in Richtung auf das Fahrzeuginnere, bis es die Zwischenposition II erreicht hat, in der die äußere Oberfläche der Tankklappe 1 unterhalb der Kraftfahrzeugaußenhaut 10 liegt. Eine Verschwenkung hat zu diesem Zeitpunkt noch nicht stattgefunden, und die Tankklappe 1 liegt innerhalb der Kontur der Zugangsöffnung, hier der Tankzugangsöffnung.

Nach Erreichen der Zwischenstellung II wird die Tankklappe 1 um die Drehachse 5 verschwenkt, die ebenfalls senkrecht zu der Kraftfahrzeugaußenhaut 10 bzw. senkrecht zu der flächigen Erstreckung der Tankklappe 1 ausgerichtet ist. Das Verschwenken ist durch die zwei hintereinander angeordneten Pfeile angedeutet.

Nach dem vollständigen Verschwenken oder Herausschwenken der Tankklappe 1 aus der Zugangsöffnung ist ein Tankstutzen 2 freigegeben, der ggf. durch einen Tankdeckel verschlossen ist und betankt werden kann. Nach Beendigung des Tankvorganges verschwenkt die Tankklappe 1 um die Drehachse 5 zurück, bis sie innerhalb der Kontur der Zugangsöffnung ist, um dann nach außen zu verfahren, bis die äußere Oberfläche der Tankklappe 1 in einer Ebene mit der Kraftfahrzeugaußenhaut 10 liegt.

Um die Tankklappe 1 kann eine Dichtung angeordnet sein, so dass die Tankmulde 6 gegen das Eindringen von Schmutz und Wasser geschützt ist. An der Tankmulde 6 ist eine Dichtung 3 ausgebildet, die den Tankstutzen 2 aufnimmt und somit das Fahrzeuginnere zuverlässig gegen Feuchtigkeit, ausgetretenen Kraftstoff oder Schmutz abdichtet.

Zur Bewirkung der Verfahrbewegung in Richtung auf den Tankstutzen 2 und der Verschwenkung aus der Kontur der Zugangsöffnung ist ein motorischer Antrieb 4 vorgesehen, der vorzugsweise als ein Stellmotor ausgebildet ist.

In der Figur 2 ist eine nicht zur Erfindung gehörende Variante der efindungsgemä-βen Vorrichtung dargestellt, bei dem die Tankklappe 1 nicht in Richtung auf den Tankstutzen 2 nach innen, sondern in die entgegengesetzte Richtung nach außen verfahren wird. In der rechten Darstellung in der Draufsicht ist gezeigt, dass die Drehachse 5 innerhalb der Kontur der Tankklappe 1 liegt, so dass, ausgehend von der Verschlußstellung I, während der gesamten Schwenkbewegung um die Drehachse 5 ein gewisser Flächenbereich der Zugangsöffnung von der Tankklappe 1 überdeckt wird. In der rechten Darstellung der Figur 2 wird dies anhand der Überdeckung zwischen der Verschlußstellung I und der geöffneten Stellung III deutlich.

Anhand der Figur 2 in der linken Darstellung ist zu erkennen, dass die Tankklappe 1 zunächst nach außen verfährt, also in Richtung von dem Tankstutzen 2 weg, wobei die Verfahrrichtung senkrecht zu der flächigen Erstreckung der Tankklappe 1 verläuft. Nach Erreichen der Zwischenstellung II, bei der die Unterseite der Tankklappe 1 zu der Kraftfahrzeugaußenhaut beabstandet ist und über diese übersteht, wird eine Verschwenkbewegung um die Drehachse 5 durch den motorischen Antrieb 4 eingeleitet und die Tankklappe 1 wird verschwenkt, bis der Tankstutzen 2 freigegeben wird. Zum Verschließen der Zugangsöffnung wird der Bewegungsablauf umgekehrt.

Auch gemäß der Figur 2 ist die Vorrichtung als ein System ausgebildet, das aus dem motorischen Antrieb 4, der Tankmulde 6 mit integrierter Weichkomponente zur Abdichtung gegenüber Staub, Wasser und Kraftstoffgasen und einem Trägerelement 11 besteht, auf dem eine Tankklappenaußenhaut 12 aufgebracht ist. Weiterhin ist ein Ablauf für Kraftstoff, Wasser und dergleichen im Bereich des Einfüllstutzens 2 vorgesehen, der in dem Gesamtsystem integriert ist.

Sowohl in der Figur 1 als auch in der Figur 2 ist die Tankklappe 1 als ein zweiteiliges Bauteil ausgebildet, das aus einem Trägerelement 11 und einer Tankklappenaußenhaut 12 besteht. Dies hat den Vorteil, dass ein Modul aus Trägerelement, Antrieb und Tankmulde mit entsprechenden Dichtungen 3 und Abläufen vormontiert werden kann, während die Tankklappenaußenhaut 12 zusammen mit der übrigen Karosserie lackiert wird. Ein Einbau des Tankklappenmoduls kann nach dem Lackieren des Kraftfahrzeuges erfolgen, und die Tankklappenaußenhaut 12 kann anschließend formschlüssig mit dem Trägerelement 11 verbunden oder auf dieses aufgeklebt werden. Dadurch ist es möglich, eventuelle Fluchtungsfehler auszugleichen. Weiterhin wird durch die erfindungsgemäße Vorrichtung ein Lackieren der Rückseite der Tankklappe 1 bzw. der Tankklappenaußenhaut 12 überflüssig, da diese nicht mehr sichtbar ist.

Alternativ zu einem motorischen Antrieb ist ein manueller Antrieb oder ein manuelles System vorgesehen, bei dem das Schließen oder Öffnen der Tankklappe mit einem Federelement bewirkt wird.

## Patentansprüche

1. Vorrichtung zum Verschließen einer Tankzugangsöffnung in einer Kraftfahrzeugaußenhaut (10) mit einer Verschlussklappe (1), die aus einer Verschlussstellung in eine Zugangsstellung verschwenkbar ist, wobei in der Verschlussstellung die Verschlussklappe (1) im wesentlichen bündig mit der Kraftfahrzeugaußenhaut (10) abschließt und die Verschlussklappe (1) im Wesentlichen orthogonal zu der Kraftfahrzeugaußenhaut (10) verfahrbar und um eine Schwenkachse (5), die im wesentlichen orthogonal zu der Kraftfahrzeugau-βenhaut (10) orientiert ist, verschwenkbar gelagert ist, **dadurch gekennzeichnet, dass** die Verschlussklappe (1) nach innen verfahrbar gelagert ist und ihr ein Antrieb (4), insbesondere Motor zugeordnet ist, der die Verschlussklappe (1) nach innen verfährt und um die Drehachse (5) verschwenkt, wobei die Verschlussklappe (1) zusammen mit dem Antrieb (4) und einer Tankmulde (6) ein Modul bildet und die Verschlussklappe (1) in der geöffneten Stellung aus der Tankmulde (6) herausfährt.

2. Vorrichtung nach Anspruch 1, **dadurch gekennzeichnet, dass** bei einer Verfahrbarkeit nach außen die Drehachse (5) innerhalb der Kontur der Verschlussklappe (1) liegt.

3. Vorrichtung nach Anspruch 1 oder 2, **dadurch gekennzeichnet, dass** die Verschlussklappe (1) eine Verschlussklappenaußenhaut (12) aufweist, die auf einem Trägerelement (11) angeordnet ist, das verschieblich und verschwenkbar gelagert ist.

4. Vorrichtung nach Anspruch 3, **dadurch gekennzeichnet, dass** die Verschlussklappenaußenhaut (12) auf dem Trägerelement (11) formschlüssig festgelegt oder festgeklebt ist.

5. Vorrichtung nach Anspruch einem der voranstehenden Ansprüche, **dadurch gekennzeichnet, dass** die Verschlussklappe (1) oder die Verschlussklappenaußenhaut (12) aus Kunststoff oder Metall ausgebildet ist.

6. Vorrichtung nach einem voranstehenden Ansprüche, **dadurch gekennzeichnet, dass** der Antrieb (4) über einen Schalter im Kraftfahrzeuginnenraum und/oder eine Fernbedienung aktivierbar ist.

7. Vorrichtung nach einem der voranstehenden Ansprüche, **dadurch gekennzeichnet, dass** zwischen dem Antrieb (4) und der Verschlussklappe (1) eine Rutschkupplung angeordnet ist.

8. Vorrichtung nach einem der voranstehenden Ansprüche, **dadurch gekennzeichnet, dass** der Antrieb als Federelement ausgebildet ist.

## Claims

1. Device for closing off a tank access opening in a motor vehicle outer skin (10), having a closure flap (1) which is pivotal from a closed position into an access position, with the closure flap (1) ending substantially flush with the motor vehicle outer skin (10) in the closed position and the closure flap (1) mounted such that it is shiftable substantially at a right angle to the motor vehicle outer skin (10) and pivotal about a pivot axis (5) which is oriented substantially at a right angle to the motor vehicle outer skin (10), **characterised in that** the closure flap (1) is mounted such that it is inwardly shiftable and a drive (4), in particular a motor, is associated therewith, shifts the closure flap (1) inwards and pivots it about the axis of rotation (5), with the closure flap (1), together with the drive (4) and a tank recess (6), forming a module, and shifting the closure flap (1) out of the tank recess (6) when it is in the opened position.

2. Device according to Claim 1, **characterised in that** with the possibility of shifting outwards the axis of rotation (5) lies inside the contour of the closure flap (1).

3. Device according to Claim 1 or 2, **characterised in that** the closure flap (1) has a closure flap outer skin (12) which is arranged on a carrier element (11) which is mounted displaceably and pivotally.

4. Device according to Claim 3, **characterised in that** the closure flap outer skin (12) is form-fittingly fixed or glued to the carrier element (11).

5. Device according to one of the preceding claims, **characterised in that** the closure flap (1) or the closure flap outer skin (12) is constructed from plastics or metal.

6. Device according to one of the preceding claims, **characterised in that** it is possible to activate the drive (4) by way of a switch in the motor vehicle interior and/or by remote control.

7. Device according to one of the preceding claims, **characterised in that** a slip clutch is arranged between the drive (4) and the closure flap (1).

8. Device according to one of the preceding claims, **characterised in that** the drive is constructed as a spring element.

## Revendications

1. Dispositif de fermeture d'une ouverture d'accès à un réservoir formée dans le revêtement extérieur (10) d'un véhicule automobile, comprenant une trappe de fermeture (1) pouvant pivoter d'une position de fermeture vers une position d'accès, dans lequel dans la position de fermeture, la trappe de fermeture (1) obture de façon sensiblement jointif le revêtement extérieur (10) du véhicule automobile et la trappe de fermeture (1) est déplaçable vers une position sensiblement octogonale par rapport au revêtement extérieur (10) du véhicule automobile et est monté pivotant autour d'un axe de pivotement (5) qui est orienté sensiblement orthogonalement par rapport au revêtement extérieur (10) du véhicule automobile, **caractérisé en ce que** la trappe de fermeture (1) est montée pour être déplaçable vers l'intérieur et est associée à un entraînement (4) en particulier un moteur, qui déplace la trappe de fermeture (1) vers l'intérieur, qui la fait pivoter autour de l'axe de rotation (5), la trappe de fermeture (1) formant un module ensemble avec l'entraînement (4) et une auge de réservoir (6) et qui dans la position d'ouverture déplace la trappe de fermeture (1) dans la position d'ouverture à l'extérieur de l'auge de réservoir (6).

2. Dispositif selon la revendication 1, **caractérisé en ce que** pour une possibilité de déplacement vers l'extérieur, l'axe de pivotement (5) est situé à l'intérieur du contour de la trappe de fermeture (1).

3. Dispositif selon la revendication 1 ou 2, **caractérisé en ce que** la trappe de fermeture (1) présente un revêtement extérieur de trappe (12) qui est disposé sur un élément de support (11) qui est monté de façon coulissante et pivotante.

4. Dispositif selon la revendication 3, **caractérisé en ce que** le revêtement extérieur de trappe (12) est fixé solidement sur l'élément de support (11) par coopération de formes ou par collage.

5. Dispositif selon l'une des revendications précédentes, **caractérisé en ce que** la trappe de fermeture (1) ou le revêtement extérieur de trappe (12) est réalisé en matière synthétique ou en métal.

6. Dispositif selon l'une des revendications précédentes, **caractérisé en ce que** l'entraînement (4) peut être activé par un interrupteur dans l'espace intérieur du véhicule automobile et/ou par une télécommande.

7. Dispositif selon l'une des revendications précédentes, **caractérisé en ce qu'**entre l'entraînement (4) et la trappe de fermeture (1) est disposé un accouplement à glissement.

8. Dispositif selon l'une des revendications précédentes, **caractérisé en ce que** l'entraînement est constitué par un élément à ressort.
